# EUROPEAN PATENT APPLICATION

(11) **EP 2 112 782 A1**
(43) Date of publication of application: **28.10.2009**
(21) Application number: 08007996.5
(22) Date of filing: 25.04.2008
(51) Int. Cl.: H04L 12/24

(54) **Assignment of network node identifier based on network environment information**

(71) Applicant: Nokia Siemens Networks Oy, 02610 Espoo (FI)
(72) Inventor: Martos-Riano, Demian, 10115 Berlin (DE); Sanneck, Henning, Dr., 81669 München (DE)
(74) Representative: Bruglachner, Thomas E.

(57) **Abstract**

It is described a method for assigning an identifier to a network node (120) being arranged within a plurality of neighbouring network nodes (130, 135), The method comprises acquiring network environment information from at least one neighbouring network node (130, 135) by the network node (120), forwarding at least a portion of the network environment information to an assignment server (110), and assigning the identifier to the network node (120) based on the forwarded portion of the network environment information. The acquired network environment information may comprise a geolocation information about at least one of the neighbouring network nodes (130, 135). Based one this geolocation information the geolocation of the network node (120) can be evaluated at least roughly. It is further described an assignment server (110), a network node (120) and a telecommunication system (100), which are respectively adapted to perform the described network node identifier assignment method..

## Description

### Field of invention

The present invention relates to the field of telecommunication networks comprising a plurality of network nodes, which are identified within the telecommunication network by means of an individual network node identifier. In particular, the present invention relates to a method for assigning such an identifier to a network node of a telecommunication network. Further, the present invention relates to an assignment server, to a network node and to a telecommunication system, which are respectively adapted to perform the described network node identifier assignment method.

### Art Background

The rollout of a new telecommunications network or its expansion are currently tasks requiring a lot of manual intervention. The cost for this manual intervention is a big portion of the total operational expenditure of mobile network operator. One possibility to reduce the operational expenditure is to automate configuration tasks such as for instance the installation or insertion of new network nodes.

When a new radio network base station is deployed within a telecommunication network, a physical ID needs to be selected for each of its supported cells. Thereby a collision with respective neighbouring cells must be avoided. Traditionally, a proper physical ID is derived from a radio network planning and is part of the initial configuration of the network node.

The physical ID assignment shall fulfil the following requirements:
a) "collision-free": the physical ID is unique within the area covered by the corresponding
b) "confusion-free": a cell shall not have neighbouring cells with identical physical IDs

In the following different known mechanisms for selecting an appropriate physical ID are briefly discussed.

### A)

### Randomized physical ID selection

This is probably the simplest way for performing an ID selection. Thereby, the physical ID is randomly selected from a plurality of different possible values. However, this method does not address the two requirements a) and b) identified above and may lead to serious problems in the network that are difficult to detect.

### B)

### Physical ID selection after radio network environment scanning

This method relies on the capability of the network nodes to scan its radio network environment before starting to operate. This holds at least in terms of reception of the downlink transmission band of eventual neighbouring radio cells and in the frequency band where it intends to establish its own cell(s). This scanning phase helps the network node to identify potential intra-frequency neighbour cells and thus avoid a collision in the selection of the physical ID for its own cell.

### C)

### Physical ID selection after the use of a temporary identifier

This method relies on the use of a temporary physical Identifier for a configuration phase during which the network node, supported by User Equipments within the cell, identifies intra-frequency neighbour cells and thus avoids a collision in the selection of the physical ID for its own cell.
However, the described method C) depends both on the availability of User Equipments within the cell and on the proper location of the User Equipments in order to identify each of all neighbour network nodes.

### D)

### Physical ID assignment by means of network rollout planning

In traditional network rollout and configuration methods, the physical ID is properly configured according to the identified requirements. This can be done by employing a network planning tool, which usually provides an automatic function for the proper assignment of the physical ID of a network node. Thereby, the network nodes and the corresponding antennas also need to be properly geolocated. Thereby, the geolocation accuracy required by the network planning tool is typically far higher in order to properly configure the whole range of radio parameters. Further, Neighbour Relations have to be taken into account. In this approach, the network node receives the configuration parameters before being brought into operation.

DE 10 2006 014 590 A1 discloses a method for a computer aided integration of a network node within a distributed data network, which comprises a plurality of network nodes being respectively arranged at predefined spatial locations. After having deployed the network node the actual position of the network node is determined and compared with a corresponding setpoint value of spatial planning data. Depending on the actual position data appropriate configuration data are used for configuring the network node. The actual position of the network node may be for instance acquired by means of a Global Positioning System (GPS) receiver. The known automatic computer aided integration of a network node strongly depends on the availability of the geo-location of the network node. This geo-location may be however not available for instance if the network node has to be deployed indoor within a building.

There may be a need for providing a network configuration technique, which (a) allows for an appropriate assignment of an identifier to a network node and which (b) can reliably be applied to a network node which is supposed to be deployed indoor.

### Summary of the Invention

This need may be met by the subject matter according to the independent claims. Advantageous embodiments of the present invention are described by the dependent claims.

According to a first aspect of the invention there is provided a method for assigning an identifier to a network node being arranged within a plurality of neighbouring network nodes. The provided method comprises (a) acquiring network environment information from at least one neighbouring network node by the network node, (b) forwarding at least a portion of the network environment information to an assignment server, and (c) assigning the identifier to the network node based on the forwarded portion of the network environment information.

This first aspect of the invention is based on the idea that network environment information from and about neighbouring network nodes can be collected by or extracted from the network node in order to forward these information to the assignment server. The assignment server then evaluates this network environment information in order to determine an appropriate identifier for the network node. Thereby, a consistent set of identifiers may be determined for the collectivity of the network node and the neighbouring network nodes.

In this application the term "network environment information" is used for a geographical and/or network-topological information about a network element representing a component of the telecommunication network. The term "network environment information" has not to be understood in a non network related manner. In particular the term "network environment information" is not used for climatic conditions such as air pressure, weather condition and the like.

The network environment information may be for instance a cell ID of at least on of the neighbouring network nodes. The network environment information may also be a signal strength of radio signals transmitted from a neighbouring network node to the network node.

The network node identifier may be any identifier the respective network node carries. In particular the network node identifier may be a site ID. However, it is pointed out that the described method is not limited to assigning network node identifiers, which provide the basic identification ("root identifier") in a the telecommunication network. The described method may rather apply to any identifier the network node carries. In particular the network node identifier may be for instance a physical cell ID and/or a network plan ID referring to the respective network node. The identifier may be generated by means of a planning procedure and/or by means of a dynamic identifier assignment respectively a generation of an appropriate identifier.

The described method is in particular advantageous if it is accomplished after a new network node has been deployed within a telecommunication network and/or when the position of an already deployed network node has been changed with respect to the neighbouring network nodes of the telecommunication network. In case of a configuration of the telecommunication network the described identifier assignment method may be carried out successively for each network node, which is added to the telecommunication network.

The described method may be carried out with no or with only a negligible user interaction. This may mean that after having decided about the approximate spatial position respectively a location of a network node, which is supposed to be installed, an appropriate network node identifier can be determined, which is consistent with the network node identifiers of the neighbouring network nodes which have already been installed.

It has to be mentioned that when an appropriate network identifier has been selected, auto-configuration procedures of the network node might be triggered. Thereby, the network node may be provided with predefined functionalities fitting to the setting of the network node within the neighbouring network nodes. This auto-configuration may provide the advantage that errors associated with the deployment procedure might be avoided. Specifically, when selecting a network node it may not be necessary for the operator to care about the specific hardware and/or software of the network node. When the network node has been deployed, the appropriate functionalities of the network element can be automatically activated. Thereby, the probability of the errors during an installation procedure for the network node may be reduced significantly.

It has to be mentioned that the network environment data acquisition performed by the network node from the neighbouring network nodes may be carried out via any type of connection. For instance the network environment data acquisition may be carried out via a radio transmission link extending between the network node and the respective neighbouring network node. Thereby, the radio transmission link might be a direct or an indirect link for instance via a repeater device respectively a relay node. Further, the network environment data acquisition may be carried out via a wired connection comprising a metal wire and/or an optical fibre. Furthermore, the network environment data acquisition may be carried out via just a logical link. Thereby, a core network and/or any other network such as for instance an IP based network may be employed.

According to a further embodiment of the invention the method further comprises filtering the acquired network environment information by the network node, wherein the portion is obtained by the filtering procedure. This may provide the advantage that network environment information from and about the neighbouring network node, which might not be needed for the identifier assignment, can be removed from the collected respectively from the acquired network environment information before forwarding them to the assignment server. Thereby, the amount of data, which have to be forwarded to the assignment server, may be reduced.

The filtering procedure may be accomplished within a special filtering unit of the network node. This filtering unit which may be called Node Identification Information Collector, can be realized by means of hardware, by means of software and/or by any appropriate combination of hardware and software. In particular, the Node Identification Information Collector may be equipped with some "intelligence" such that an appropriate filtering can be carried out without requiring input parameters for the filtering procedure. Specifically, due to the "intelligence" of the Node Identification Information Collector it may not be necessary to provide the Node Identification Information Collector from outside with appropriate instructions respectively with appropriate input parameters in order to perform the filtering process.

According to a further embodiment of the invention the method further comprises transmitting the assigned identifier from the assignment server to the network node.

Transmitting the assigned identifier to the network node may provide the advantage that the assigned identifier will not only be known by the assignment server but also by the network node itself. After having received the assigned identifier the network node may be prepared to initiate by itself an auto-configuration procedure, wherein, as has already been described above, depending on the assigned identifier appropriate functionalities of the network node may be activated.

According to a further embodiment of the invention the method further comprises transmitting information about at least one of the neighbouring network nodes from the assignment server to the network node. This information might have been previously collected by the assignment server by carrying out the described identifier assignment method with respect to other network nodes, which now represent neighbouring network nodes and which have previously represented the respective network node.

The transmission of information about other neighbouring network nodes may provide the advantage that detailed network environment information will be transferred to the network node. Based on this detailed information the network node may be able to select its optimal configuration, which of course also may depend on the configuration and/or the identifier of the neighbouring network nodes.

According to a further embodiment of the invention the step of acquiring network environment information is carried out by means of a direct or an indirect connection between the neighbouring network node and network node.

The network environment information may be transmitted by means of a single hop data transmission or by means of a multi hop data transmission. In particular a mobile user Equipment may be used for the multi hop data transmission between the neighbouring network node and the network node. Thereby, the User Equipment may be any type of communication end device, which is capable of connecting both with the network node and at least one of the neighbouring network nodes by means of a wireless transmission link. In particular the User Equipment may be a cellular mobile phone, a Personal Digital Assistant (PDA), a Notebook computer and/or any other movable communication device.

The described network environment information acquisition by means of a direct and/or an indirect connection may provide the advantage that also information about other neighbouring network nodes may be acquired within a large spatial region. In particular, information about and from neighbouring network nodes may be acquired, which neighbouring network nodes are located in a comparatively large distance from the respective network node.

According to a further embodiment of the invention the step of assigning the identifier to the network node is further based on further information stored in a database memory of the assignment server.

The further information may be information, which has been previously collected by the assignment server from one or more of the plurality of neighbouring network nodes. This may provide the advantage that the described identifier assignment can rely on an extensive database, which allows for a consistent identifier assignment within a plurality of neighbouring network elements.

According to a further embodiment of the invention the acquired network environment information comprises a geolocation information about at least one of the neighbouring network nodes. This may provide the advantage that it is possible to approximately evaluate, at a central server, the location of the network node respectively the location of a cell served by the network node. In other words, the geolocation information comprises reporting information of the network node's cell network environment that helps to evaluate at least approximately the geolocation of the network node.

The described evaluation of the geolocation of the network node can be carried out without employing a dedicated GPS receiver, a Galileo receiver, a Glonass receiver and/or any other module or any other unit being used exclusively for the acquisition and/or the generation of position. In other words, the evaluation of the approximate geolocation does not depend on the availability of these services, which availability may be interrupted because the network node is located within an indoor location.

It has to be mentioned that it is not necessary that the geolocation information comprises the geolocation itself. It is rather sufficient that the information comprises at least one parameter value, which allows the assignment server, for instance after accessing a data base, to determine the geolocation of the respective network node.

In this application the term "geolocation" refers to an identifier about the real-world geographic location of a network node. Thereby, reference may be made to the term "geolocation", which is typically used for internet connected computer, mobile devices and/or website visitors. Geolocation can be used to refer to the practice of assessing the location, or it can be used to refer to the actual assessed location or location data. Geolocation can be performed by associating a geographic location with for instance the Internet Protocol (IP) address, Media Access Control (MAC) address, Radio Frequency Identification Devices (RFID), hardware embedded article and/or production number and/or embedded software numbers.

According to a further embodiment of the invention the network environment information comprises context information of the respective neighbouring network node.

The context information may be for instance a physical cell identifier being associated with the respective neighbouring network node. Thereby the physical cell ID might have been obtained by a radio scanning method.

Further, the context information may be a neighbour relation information between different network nodes neighbouring each other. Thereby, the neighbour relation may have been obtained previously with known methods for establishing appropriate neighbour cell relationships.

The context information may also be for instance a global cell identifier. Preferably, the global cell identifier is unique at least within one and the same network operator.

Further, the context information may comprise information on network topology like the network transport connector being used by the respective neighbouring network node. In particular the network transport connector information may be an interface identifier such as for instance a MAC address of the neighbouring network node.

It has to be mentioned that the context information might also be obtained indirectly via a third entity such as an auxiliary User Equipment. In this respect the auxiliary User Equipment might represent a transport medium for the context information about the neighbouring cells and/or the neighbouring network nodes associated with these neighbouring cells.

According to a further embodiment of the invention the context information further comprises information from network nodes being assigned to a different network operator and/or network nodes being operated with a different Radio Access Technologies. This may provide the advantage that not only context information about neighbouring network nodes of the same operator and the same Radio Access Technology (RAT) might be acquired by the respective network node. The additional usability of information about (a) network nodes from other operators and/or (b) network nodes being operated with a different RAT may allow for a substantial broadening of the database being available for assigning the most appropriate network node identifier.

According to a further embodiment of the invention the method further comprises performing a radio network planning based on the assigned identifier. This may provide the advantage that when deploying a new network node the network environment information acquired by the new network node can be used for updating the network plan to the new situation. Thereby, cells being assigned to the various network nodes may be adapted is size such that all in all the most appropriate spatial coverage and minimum interference between different cells can be realized.

It has to be mentioned that when regularly performing updates of the network plan a self organizing system may be realized, wherein every time a new network node is established and/or an already existing network node is moved from a first position to a second position an appropriate spatial coverage for each network node may be chosen. Therefore, a change of a configuration of a whole telecommunication network can be automatically performed.

According to a further aspect of the invention there is provided an assignment server of a telecommunication network. The provided assignment server comprises (a) means for receiving at least a portion of network environment information from a network node, which network environment information has been acquired by the network node from at least one neighbouring network node, and (b) means for assigning an identifier to the network node based on the received portion of the network environment information.

Also this aspect of the invention is based on the idea that network environment information from and about neighbouring network nodes can be used by the described assignment server in order to determine an appropriate network node identifier. Thereby, a consistent set of identifiers may be determined for the collectivity of the network node and the neighbouring network nodes.

The assignment server may be a so called configuration server, which may be used for configuring the network node after an appropriate identifier has been assigned. As has already been mentioned above, in the course of a configuration of the network node there may be activated certain functionalities of the network node, which may allow for an undisturbed operation of the network node within the respective network environment. Thereby, the configuration of the network node may be carried out automatically without any further user interaction. Therefore, the configuration server may also be called an auto configuration server.

The assignment server may be equipped with and/or may be connected to a database. Within this database configuration management information may be stored. Therefore, the database may also be called a configuration management database. In particular, information about the network node and all neighbouring network nodes may be stored in the database.

According to a further aspect of the invention there is provided a network node of a telecommunication network. The network node comprises (a) means for acquiring network environment information from at least one neighbouring network node, (b) means for forwarding at least a portion of the network environment information to an assignment server of the telecommunication network, and (c) means for receiving an identifier from the assignment server, wherein the identifier is based on the forwarded portion of the network environment information.

This aspect of the invention is based on the idea that a network node can acquire network environment information from and about neighbouring network nodes. This network environment information can be forwarded to the assignment server in order to assign an identifier for the network node based on the before acquired network environment information. Thereby, within the neighbourhood of the neighbouring network nodes an appropriate network node identifier can be determined. This may provide the advantage that a consistent set of identifiers may be determined for the collectivity of the network nodes and the neighbouring network nodes.

The network node may be equipped with a data base, in which in particular the network environment information about the neighbouring network nodes may be stored. This may provide the advantage that this information can be made available anytime to other network nodes and in particular to the assignment server.

The network node may be for instance a base station of a wireless access network. Further, the network node may be a movable mobile network node or a stationary immobile network node.

According to a further aspect of the invention there is provided a telecommunication network. The telecommunication network comprises (a) an assignment server as described above, (b) a network node as described above, wherein the network node is connected to the assignment server, and (c) a plurality of neighbouring network nodes, which are connected to the network node.

This aspect of the invention is based on the idea that network environment information from and about the neighbouring network nodes can be used for determining an appropriate network node identifier, which together with the identifiers of at least some of the neighbouring network nodes forms a consistent identifier set within the telecommunication network.

The connection between the network node and the neighbouring network nodes may be realized by means of a physical and/or a logical connection. A logical connection may be established for instance via a core network.

According to a further embodiment of the invention the network node is connected to the assignment server via an operation and maintenance network. Thereby, the assignment server may be an entity of the described Operation and Maintenance Network, which is adapted for operating and maintaining the network node and/or the plurality of neighbouring network nodes. The Operation and Maintenance Network may be logically separated into a Network Management System (NMS) and an Element Management System (EMS). Thereby, the NMS might be for instance coupled to a radio network planning server, whereas the EMS may be coupled to the various network nodes. Of course, it is not necessary than there is a direct coupling between the various network nodes and the EMS. The coupling can also be realized in a known manner by employing a Core Network being connected both to the EMS and to the various network elements.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the example of embodiment to be described hereinafter and are explained with reference to the example of embodiment. The invention will be described in more detail hereinafter with reference to a preferred example of embodiment but to which the invention is not limited.

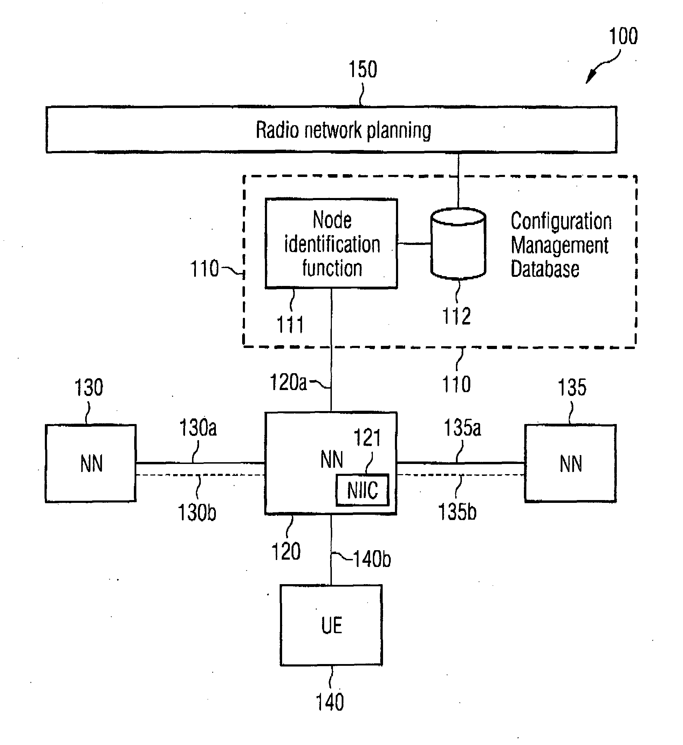

### Brief Description of the Drawing

The only Figure shows a telecommunication network comprising network elements, which are used for assigning an appropriate identifier for a network node being surrounded by two neighbouring network nodes.

### Detailed Description

The illustration in the drawing is schematically.

The only Figure shows a telecommunication network 100. According to the embodiment described here the telecommunication network is a cellular mobile telecommunication network 100. The telecommunication network 100 comprises a plurality of network components. Since this application focuses on the assignment of an appropriate identifier for a network node, only some of the network components of the telecommunication network 100 are depicted in the Figure.

The telecommunication network 100 comprises a plurality of network nodes 120, 130, 135. The network node 120 has been recently deployed according to specifications given by a radio network planning unit 150. Together with the neighbouring network nodes 130 and 135, the network node 120 should provide for a complete spatial coverage of the cellular mobile telecommunication network 100. According to the embodiment described here the network nodes 120, 130, 135 are base stations of the cellular mobile telecommunication network 100.

According to the embodiment described here the first neighbouring network node 130 is connected with the network node 120 by means of a fixed network link 130a and a radio link 130b. Accordingly, the second neighbouring network node 135 is connected with the network node 120 by means of a fixed network link 135a and a radio link 135b. It has to be mentioned that in particular the fixed network links 130a, 135a may also be realized by means of logical links, which might involve for instance a core network, which is not depicted in the Figure.

The telecommunication network 100 further comprises a User Equipment 140, which is connected to the network node 120 via a radio link 140b. The User Equipment 140 may be any type of communication end device, which is capable of connecting both with the network node and with at least one of the neighbouring network nodes by means of a wireless transmission link. According to the embodiment described here the User Equipment is a cellular mobile phone 140.

The telecommunication network 100 further comprises an assignment server 110, which is connected to the network node 120 by means of a fixed network link 120a. The assignment server 110 is used to allocate an appropriate identifier to the network node 120. According to the embodiment described here the identifier is a physical ID, which fulfils the above mentioned requirements "collision-free" and "confusion-free".

The telecommunication network 100 further comprises a radio network planning unit 150, which is connected to the assignment server 110. The radio network planning unit 150 is used when a set up the telecommunication network 100 is performed. Thereby, the term "set up" has to be understood in a wide manner. In particular the term "set up" also includes a deployment of a further network node within an arrangement of already deployed network nodes or a movement of a network node within the telecommunication network from a first location to a second location.

The network node 120 has been deployed at a location given by the radio network planning unit 150. Thereby, depending on general conditions regarding possible installation locations for the network node 120 a maximum spatial coverage of the cellular mobile telecommunication network 100 should be provided.

In order to provide for an appropriate assignment of an identifier respectively a physical ID of the recently deployed network node 120, the network node 120 is equipped with a node identification information collecting unit 121. This unit 121 is capable of collecting network environment information from the neighbouring network nodes 130 and 135. This information might be acquired via the fixed network links 130a, 135a and/or via the radio links 130b, 135b.

The acquired network environment information may comprise context information of the respective neighbouring network node 130, 135. The context information may be for instance a physical cell identifier being associated with the respective neighbouring network node. Further, the context information may be a neighbour relation information between different neighbouring network nodes. The context information may also be for instance a global cell identifier. Further, the context information may comprise information on a network transport connector being used by the respective neighbouring network node. In particular the network transport connector information may be an interface identifier such as for instance a MAC address of the neighbouring network node.

According to the embodiment described here the acquired network environment information comprises a geolocation information about at least one of the neighbouring network nodes 130, 135. Based on this geolocation information it is possible to evaluate at least approximately at the assignment server 110 the location of the network node 120. In other words, the acquired geolocation information from the neighbouring network nodes 130, 135 exhibit reporting information of network node 120 about it's cell network environment that helps to evaluate at least approximately the geolocation of the network node 120.

It has to be mentioned that also the User Equipment 140, which is connected to the network node 120, might provide useful network environment information to the network node 120, which might allow for evaluating the geolocation of the network node 120 at least approximately. Thereby, the User Equipment 140 may report its own geolocation to the network node 120. This geolocation might have been obtained by a GPS receiver of the User Equipment 140. The knowledge of the geolocation information of the User Equipment 140 might also be based on known position finding techniques. Thereby, known locations of the other network nodes, which are also in contact with the User Equipment 140, can be used for evaluating the current geolocation of the User Equipment 140.

At this point it is emphasized that the described evaluation of the geolocation of the network node 120 is carried out without employing a dedicated GPS receiver, a Galileo receiver, a Glonass receiver and/or any other unit being used exclusively for the acquisition of the geolocation of the recently deployed network node 120.

After having acquired the network environment information from the neighbouring network nodes 130, 135 and/or from the User Equipment 140, the node identification information collecting unit 121 filters the acquired network environment information. Thereby, the filtering process is used for removing some network environment information from and about the neighbouring network node, which is not needed for an assignment of an appropriate identifier for the network node 120. The network environment information, which remains after the filtering, is forwarded to a node identification unit 111 of the assignment server 110.

The node identification unit 111 is coupled to a configuration management database 112, which also represents a part of the assignment server 110. Within the configuration management database 112 there are stored many different data, which might be useful for the assignment of an appropriate identifier for the network node 120 respectively for the cell being associated with the network node 120. In particular the configuration management database 112 may comprise data, which have been received from the radio network planning unit 150 and which are related to a desired geolocation of the network node 120, which geolocation has been determined during a planning phase of the mobile cellular telecommunication network 100. Further, the configuration management database 112 may comprise geolocation data about other network nodes respectively about the neighbouring network nodes 130, 135, which geolocation has been acquired before for instance be applying the same geolocation acquisition procedure, which is now described with reference to the network node 120.

Based on the network environment information provided by the network node 120 and on appropriate information stored in the configuration management database 122, the node identification unit 111 evaluates an appropriate identifier for the network node 120. This identifier is then transmitted to the network node 120.

After having transmitted the network node identifier to the network node 120, an automatic configuration of the network node is initiated. Thereby, the network node 120 may be provided with predefined functionalities fitting to the setting of the network node 120 within the neighbouring network nodes. This auto-configuration may provide the advantage that errors associated with the deployment procedure might be avoided. Specifically, when selecting a network node it may not be necessary for the operator to care about the specific hardware and/or software of the network node. When the network node has been deployed, the appropriate functionalities of the network element can be automatically activated. Thereby, the probability of the errors during an installation procedure for the network node may be reduced significantly.

According to the embodiment described here the configuration data for the network node 120 are stored in the configuration management database 112.

In order to recapitulate the above described embodiment of the present invention one can state that the location of a cell being served by the network node 120 can be evaluated at least approximately by means of reporting information of the cell's network environment that helps to evaluate the geolocation of the network node 120. This evaluation is carried out at a central server, which in this application is called assignment server 110.

The reporting information may comprise information on other neighbouring network nodes 130, 135. The neighbouring network nodes 130, 135 may be assigned to the same and/or to a different telecommunication network. Thereby, the different telecommunication network may rely on the same or on a different Radio Access Technology.

It has to be mentioned that the reporting information is by itself a geolocation information in case that the geolocation of the reported neighbouring network nodes 130, 135 respectively the cells being served by the neighbouring network nodes 130, 135 is known. Further reporting respectively network environment information may be (a) information on a network connector's identifier being used by the network node 120 and (b) information obtained from the auxiliary User Equipment 140 on neighbouring cells or GPS coordinates reported by the User Equipment 140.

The described method for assigning an identifier for the network node 120 relies on a central node identification function that stores information about other network nodes, their accurate or at least approximate location, their supported cells and the related configuration of the other network nodes such as their physical ID. The central node identification function acts as a sort of network node support function, and in this it bears interesting similarities to a Global Cell Identifier, wherein the identifier respectively the address function for a network node is identified in the context of known Automatic Neighbour Relation (ANR).

Assuming that the geolocation of a network node is available (determined by for instance by a network node embedded means such as a GPS receiver), it is possible in a centralized entity, relying on simple distance calculations, to automatically provide an optimum physical ID assignment to the network node, fulfilling the identified requirements. This geo-location, which is actually corresponding to the transmitting antenna(s) supporting the considered cell, does not need a high accuracy. In fact, for an optimum selection respectively assignment of the physical ID, it is enough to have a coarse distinction on where the respective network node is placed with respect to neighbouring network nodes.

The geolocation of the network node may be of coarse accuracy or based on other types of information, which may have been obtained by applying the above described method B) (Physical ID selection after radio network environment scanning) or the above described method C) (Physical ID selection after the use of a temporary identifier) and resulting in the identification of some few neighbouring network nodes. While this information might be not sufficient for proper geolocation, this information is definitely precise enough for proper assignment of a physical ID to the network node.

It has to be mentioned that Neighbour Relations (NR) are not necessarily identified by the described method for assigning an identifier to a network node, but the central node identification function is capable to identify univocally the neighbour corresponding to a given physical ID. In this manner, the potential NR is solved on the terms needed for e.g. Long Term Evolution (LTE) mobility for each of the cells.

A relevant characteristic of this approach is that the network node is setting requests to the central node identification function and receiving the corresponding support. This general concept might also be helpful for other Self Organizing Network purposes.

In other words, the central node identification function directly evaluates the most appropriate physical ID to be selected for the new network node 120 respectively for the cell being served by the new network node 120. If the new network node 120 is not capable to provide an accurate geolocation for the new cell, the initial NR obtained by applying either the above described method B) (Physical ID selection after radio network environment scanning) or the above described method C) (Physical ID selection after the use of a temporary identifier) can eventually be used by a Network Management System (NMS) or Element Management System (EMS) function "GeoLoc" to grossly evaluate the network node location and select an appropriate physical ID in an optimized way. Compared to known methods the described assignment of a network node identifier based on network environment information from neighbouring network nodes provides a better selection of the physical ID. It has to be mentioned that the function "GeoLoc" can eventually take into account additional network topology information when using just the NR of the neighbouring cells. Thereby, a sub-optimal physical ID selection can be avoided.

In other words, if the function "GeoLoc" is specified, then the above described method B) (Physical ID selection after radio network environment scanning) or the above described method C) (Physical ID selection after the use of a temporary identifier) can also be seen as methods to obtain an initial NR, which is used in a network node directory service to evaluate a coarse geolocation of the new cell and select the physical ID of the corresponding network node in an optimized way. This provides the advantage that for a new cell it is no more necessary to obtain Neighbour Relations related to neighbouring cells.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: telecommunication network
- 110: assignment server
- 111: node identification unit
- 112: configuration management database
- 120: network node
- 120a: fixed network link
- 121: node identification information collecting unit
- 130: first neighbouring network node
- 130a: fixed network link
- 130b: radio link
- 135: second neighbouring network node
- 135a: fixed network link
- 135b: radio link
- 140: User Equipment / cellular mobile phone
- 140b: radio link
- 150: radio network planning unit

## Claims

1. Method for assigning an identifier to a network node (120) being arranged within a plurality of neighbouring network nodes (130, 135), the method comprising
• acquiring network environment information from at least one neighbouring network node (130, 135) by the network node (120),
• forwarding at least a portion of the network environment information to an assignment server (110), and
• assigning the identifier to the network node (120) based on the forwarded portion of the network environment information.

2. The method as set forth in the preceding claim, further comprising
• filtering the acquired network environment information by the network node (120), wherein the portion is obtained by the filtering procedure.

3. The method as set forth in any one of the preceding claims, further comprising
• transmitting the assigned identifier from the assignment server (110) to the network node (120).

4. The method as set forth in any one of the preceding claims, further comprising
• transmitting information about at least one of the neighbouring network nodes (130, 135) from the assignment server (110) to the network node (120).

5. The method as set forth in any one of the preceding claims, wherein
acquiring network environment information is carried out by means of a direct or an indirect connection between the neighbouring network node (130, 135) and network node (120).

6. The method as set forth in any one of the preceding claims, wherein
assigning the identifier to the network node (120) is
further based on further information stored in a database memory (112) of the assignment server (110).

7. The method as set forth in any one of the preceding claims, wherein
the acquired network environment information comprises a geolocation information about at least one of the neighbouring network nodes (130, 135).

8. The method as set forth in any one of the preceding claims, wherein
the network environment information comprises context information of the respective neighbouring network node (130, 135).

9. The method as set forth in claims 8, wherein
the context information further comprises information from network nodes being assigned to a different network operator and/or network nodes being operated with a different Radio Access Technologies.

10. The method as set forth in any one of the preceding claims, further comprising
• performing a radio network planning based on the assigned identifier.

11. Assignment server of a telecommunication network (110), the assignment server (110) comprising
• means for receiving at least a portion of network environment information from a network node (120), which network environment information has been acquired by the network node (120) from at least one neighbouring network node (130, 135), and
• means for assigning an identifier to the network node (120) based on the received portion of the network environment information.

12. A network node of a telecommunication network (100), the network node (120) comprising
• means for acquiring network environment information from at least one neighbouring network node (130, 135),
• means for forwarding at least a portion of the network environment information to an assignment server (110) of the telecommunication network (110), and
• means for receiving an identifier from the assignment server, wherein the identifier is based on the forwarded portion of the network environment information.

13. A telecommunication network comprising
• an assignment server (110) as set forth in claim 12,
• a network node (120) as set forth in claim 11, wherein the network node (120) is connected to the assignment server (110), and
• a plurality of neighbouring network nodes (130, 135), which are connected to the network node (120),

14. The telecommunication network as set forth in claim 13, wherein
the network node (120) is connected to the assignment server (110) via an operation and maintenance network.
